(19) Europäisches Patentamt
European Patent Office
Office européen des brevets

(11) Publication number: **0 612 472 A1**

(12) **EUROPEAN PATENT APPLICATION**

(21) Application number: **93870033.3**

(22) Date of filing: **26.02.93**

(51) Int. Cl.[5]: **A01N 43/653**, //(A01N43/653, 43:40,39:04,39:02,37:40)

(43) Date of publication of application: **31.08.94 Bulletin 94/35**

(84) Designated Contracting States: **AT BE CH DE DK ES FR GB GR IE IT LI LU MC NL PT SE**

(71) Applicant: **MONSANTO EUROPE S.A.**
**Avenue de Tervuren 270-272**
**Letter Box 1**
**B-1150 Brussels (BE)**

(72) Inventor: **Klevorn, Thomas Bernard**
**6152 Washington Avenue**
**St Louis, Missouri 63112 (US)**
Inventor: **Euler, Jörg Peter**
**11, rue de Collège St Michel**
**B-1150 Brussels (BE)**
Inventor: **Hewitt, Samuel**
**26, rue de l'église**
**B-1325 Chaumont-Gistoux (BE)**

(74) Representative: **Bosch, Henry et al**
**Monsanto Services International S.A.**
**Patent Department**
**Avenue de Tervuren 270/272**
**Letter Box No. 21**
**B-1150 Brussels (BE)**

(54) **Herbicidal combinations comprising triazole derivatives (III).**

(57) The inventon is relative to a combination comprising a triazole compound of formula I:

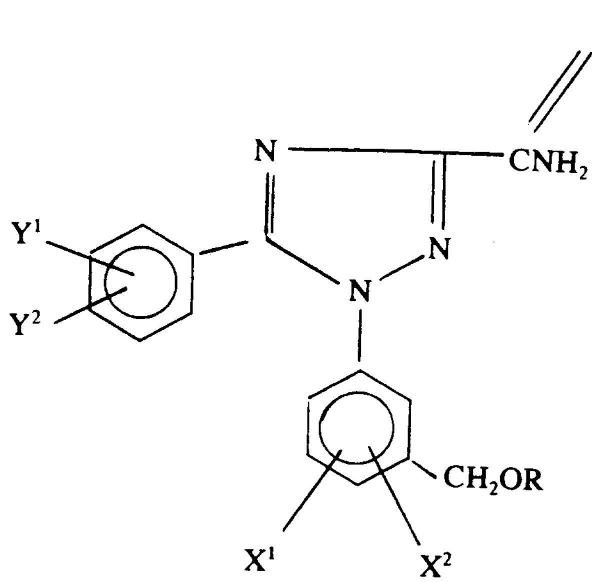

wherein R is a straight-chain alkyl group having 1 to 10 carbon atoms which is non-substituted or substituted with 1 to 19 fluorine atoms, a branched alkyl group having 3 to 10 carbon atoms which is non-substituted or substituted with 1 to 19 fluorine atoms, a cyclic alkyl group having 3 to 10 carbon atoms, an alkyl group having 1 to 3 carbon atoms which is substituted with an alicyclic structure having 3 to 7 carbon atoms, a phenyl group or

EP 0 612 472 A1

an aralkyl group having 7 to 9 carbon atoms; $X^1$ is a halogen or an alkyl group having 1 to 3 carbon atoms; $X^2$ is a hydrogen, a halogen or an alkyl group having 1 to 3 carbon atoms; $Y^1$ is a hydrogen or a fluorine; and $Y^2$ is a hydrogen or a fluorine; and at least a coherbicide selected from phytohormone type of herbicides.

The present invention relates to herbicidal compositions or combinations comprising triazole derivatives known per se and disclosed in EP-0 282 303 and at least one co-herbicide.

EP-0 282 303 discloses 1,5 - diphenyl - 1H - 1,2,4 - triazole - 3 - carboxamide derivatives of formula I:

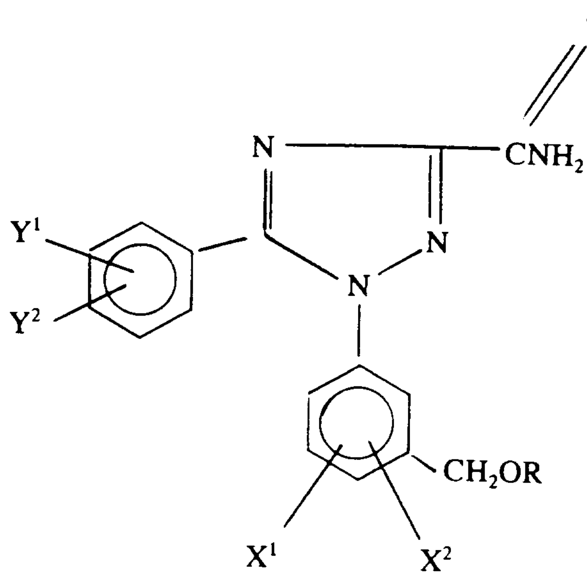

wherein R is a straight-chain alkyl group having 1 to 10 carbon atoms which is non-substituted or substituted with 1 to 19 fluorine atoms, a branched alkyl group having 3 to 10 carbon atoms which is non-substituted or substituted with 1 to 19 fluorine atoms, cyclic alkyl group having 3 to 10 carbon atoms, an alkyl group having 1 to 3 carbon atoms which is substituted with an alicyclic structure having 3 to 7 carbon atoms, a phenyl group or an aralkyl group having 7 to 9 carbon atoms; $X^1$ is a halogen or an alkyl group having 1 to 3 carbon atoms; $X^2$ is a hydrogen, a halogen or an alkyl group having 1 to 3 carbon atoms; $Y^1$ is a hydrogen or a fluorine and; $Y^2$ is a hydrogen or a fluorine. Said derivatives and compositions comprising them are said to show a high pre-emergent and post-emergent herbicidal activity but being practically harmless to rice, wheat and corn.

A drawback of said derivatives consists in that they may not be as effective on all weed species of a weed spectrum encountered in practice. More particularly, weeds like geranium, matricaria, brassica are not easily controlled by said derivatives, unless relatively high rates are used. Those high rates may then become detrimental to the crops like cereals including but not limited to rice, wheat and corn and, of course, reduce the commercial interest in said derivatives.

It is known to solve the type of problems raised above by combinations of herbicides. Such combinations, however, have still to show the good properties of the main herbicides, here the triazole derivatives; there is low interest in antagonistic combinations. Moreover, the combinations should still show a similar selectivity as the main herbicide with respect to the crops. It is understandably difficult to determine the appropriate combinations in view of the myriade of herbicides available.

EP-A-0 182 740 discloses herbicidal combinations of triazole derivatives of formula

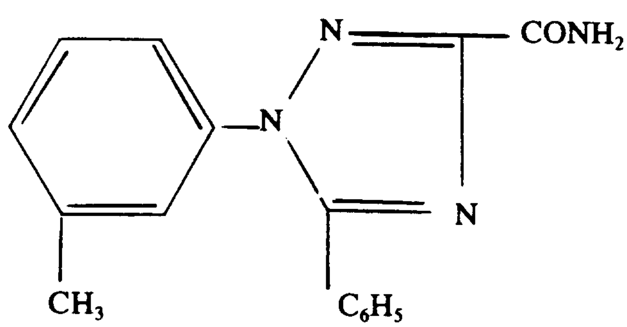

and a herbicidal urea, sulfonylurea or triazine derivative. Said combinations are said to show synergistic herbicidal efficacy against most of the monocotyledonous and dicotyledonous weeds in wheat crops.

More recently, EP 0 427 695 has disclosed herbicidal compositions comprising isoproturon (a urea herbicide) and a triazole derivative as disclosed in EP 0 282 303 within the range of weight ratio triazole derivative : isoproturon of 3:1 to 1:50. The composition is said to demonstrate a high degree of phytotoxicity at low rates of the triazole derivative in pre-emergence and post-emergence applications.

An object of the present invention now consists in providing new and efficient herbicidal compositions or combinations comprising the above triazole derivative.

Another object of the present invention consists in providing a new herbicidally active composition or combination that shows enhanced activity against broader weed spectrum than each active ingredient on its own would do.

Another object of the present invention consists in providing an improved herbicidally active composition or combination that is active against a broader weed spectrum than the above triazole derivative is and that retains its selectivity characteristics with regard to the crops when applied post-emergent.

According to a different aspect of the present invention, another object consists in providing a method of killing and controlling the germination and growth of undesired vegetation in a selective manner with regard to crops like rice, wheat and corn.

It has now surprisingly been discovered that combinations of the above defined triazole derivatives with certain selected co-herbicides are particularly efficient on a broad spectrum of weeds while still selective with respect to the crops, and in addition show synergistic effects.

According to the present invention, there are provided new herbicidal combinations comprising a triazole derivative of formula I:

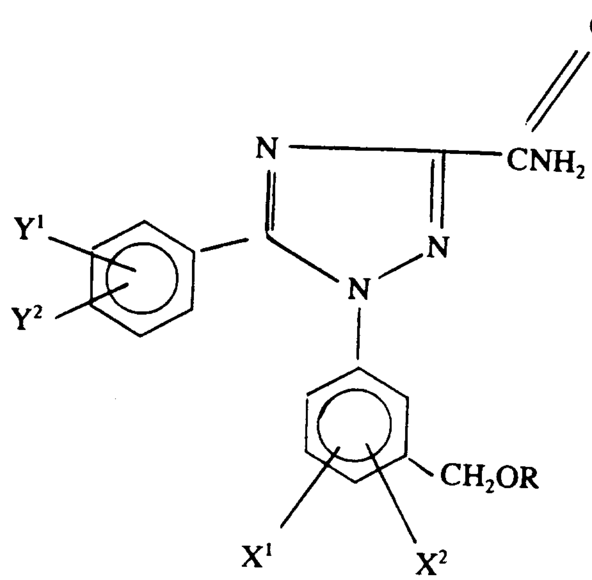

wherein R is a straight-chain alkyl group having 1 to 10 carbon atoms which is non-substituted or substituted with 1 to 19 fluorine atoms, a branched alkyl group having 3 to 10 carbon atoms which is non-substituted or substituted with 1 to 19 fluorine atoms, a cyclic alkyl group having 3 to 10 carbon atoms, an alkyl group having 1 to 3 carbon atoms which is substituted with an alicyclic structure having 3 to 7 carbon atoms, a phenyl group or an aralkyl group having 7 to 9 carbon atoms; $X^1$ is a halogen or an alkyl group having 1 to 3 carbon atoms; $X^2$ is a hydrogen, a halogen or an alkyl group having 1 to 3 carbon atoms: $Y^1$ is a hydrogen or a fluorine; and $Y^2$ is a hydrogen or a fluorine; and at least a coherbicide selected from phytohormone type of herbicides.

It has been found that the combinations according to the present invention show improved herbicidal efficacy with respect to the triazole herbicide on its own since they do not present the same weakness on weed species which are difficult to control by the triazole derivative alone. Moreover, the weed spectrum on which the combinations of the present invention are efficient is broadened when compared to the respective triazole herbicide on its own.

It has also to be noticed that the selectivity characteristics with regard to e.g. monocotyledonous crops, like cereals (including but not limited to wheat, corn and rice), have not suffered.

It is further surprising that the combinations according to the above disclosed invention do not simply present an additive herbicidal efficiency against most of the weeds encountered essentially in monocotyledonous crops, but show synergistic effects.

As a consequence, the applied quantities of individual herbicides are reduced while the efficacy is maintained on the same level. In addition, the combination even shows an acceptable level of activity against weeds where each of the herbicides has become inefficient due to low applied quantities. This implies an increase of the safety margin for suboptimal applications.

Phytohormones are understood to encompass aryloxyalkanoic and arylcarboxylic acids, known to have a chemical structure that is related to plant growth hormones. Phytohormones are said to be absorbed by the plant leaves and to be transported essentially by the phloem. They generally act on the metabolism of nucleic acids. They cause cell elongation and thus swollen and/or contorted stems; in some cases also contortions of leaf stalks and stumpy roots.

According to a preferred embodiment of the present invention, the triazole derivative has the formula I defined above where $X^1$ is chlorine, $X^2$ is hydrogen, $Y^1$ and $Y^2$ are hydrogen and R means $-CF_2CF_3$.

The phytohormone type of herbicides may include 2,4-D, MCPA, PCPB, mecoprop, mecoprop-P, dichlorprop, dichlorprop-P, dicamba, picloram and pyridines like fluroxypyr or triclopyr for instance.

Particularly preferred combinations are the triazole derivative of formula I wherein $X^1$ is chlorine, $X^2$ is hydrogen, $Y^1$ and $Y^2$ are hydrogen and R means $-CF_2CF_3$, in combination with mecoprop or fluroxypyr.

The combinations according to the invention may contain the triazole derivative and the so-called coherbicide in any ratio, depending on the particular conditions of application and on the type of herbicides used in combination.

In the case of a combination of the preferred triazole derivative and mecoprop, the ratio is advantageously comprised between 1:5 and 1:20

In the case of a combination of the preferred triazole derivative and fluroxypyr, the ratio is advantageously comprised between 5:1 and 1:5.

According to another embodiment of the present invention, advantageous combinations may comprise the preferred triazole derivative disclosed above and a mixture of two or more of the above-cited coherbicides.

Pursuant to another aspect, the present invention also covers the use of above defined combinations for selectively killing or controlling the growth or germination of undesired plants by application thereof sequentially or simultaneously to the plant, the seed or the locus of the seed or plant.

It is well understood that the individual components of the combination as defined above may be applied simultaneously or sequentially to the seed, plant or locus of the seed or plant. A simultaneous application is preferred. In this latter case, the combination may be applied in form of a tank mix of the individual herbicidal components, possibly complemented by agriculturally known adjuvants, like surfactants, anti-freeze agents, etc. ....; in form of a finely-divided powdered mixture of the triazole derivative and the coherbicide, in form of a ready-to-use formulated composition comprising the herbicidal components as defined complemented by formulation aids, surfactants, etc. ... ; or in form of a solution, dispersion or emulsion of a more concentrated or even solid formulated product which again comprises the herbicidal components, formulation aids and other agriculturally known adjuvants. The application rates depend on the particular conditions of use and on the particular herbicidal combination.

Herbicidal compositions containing the triazole derivative and the coherbicide as well as formulations derived thereof, including concentrates of aqueous or non-aqueous solutions and of aqueous suspensions which require dilution prior to application, are all embodiments of the present invention and are all referred to hereafter by the term compositions. The compositions may contain the herbicidally active components mixture in a range from 0.1% to 100% weight and may also contain at least one agriculturally acceptable adjuvant in liquid or solid form. In the compositions the herbicidal components may be present in free form or in the form of an agriculturally acceptable acid addition salt, complex or association product, such as for example a complex or association product formed with metal ions.

The compositions are prepared by known techniques by ad-mixing the herbicidally active ingredients with one or more adjuvants, including diluents, extenders, carriers and conditioning agents, to provide compositions in the form of finely divided particulate solids, granules, pellets, solutions, dispersions or emulsions. Thus the active ingredients can be used with an adjuvant such as a finely divided solid, a liquid of organic origin, water, a surfactant, a dispersing agent, an emulsifying agent, a stabilising agent, an anti-freeze agent, an anti-foam agent or any suitable combination of these.

Suitable surfactants include alkyl benzene sulfonates and alkyl naphthalene sulfonates, sulfated fatty alcohols, amines or acid amides, long chain acid esters of sodium isothionate, esters of sodium sulfosuccinate, sulfated or sulfonated fatty acid esters, petroleum sulfonates, sulfonated vegetable oils, ditertiary

acetylenic glycols, polyoxyethylene derivatives of alkylphenols (particularly isooctylphenol and nonylphenol) and polyoxyethylene derivatives of the mono-higher fatty acid esters of hexitol anhydrides (e.g., sorbitan), alkoxylated amines, inorganic ammonium salts, such as ammonium sulphate, ammonium nitrate and ammonium phosphates, ammonium salts derived from organic amines such as primary, secondary and tertiary amines, diamines such as ethylene diamine and piperazine, morpholine, polyamines, alkoxylated amines and amine surfactants. Preferred dispersants are methylcellulose, polyvinyl alcohol, sodium lignin sulfonates, polymeric alkyl naphthalene sulfonates, sodium naphthalene sulfonate, and polymethylene bisnaphthalene sulfonate.

Wettable powders are water-dispersible compositions containing the active ingredients mixture, an inert solid extender and one or more wetting and dispersing agents. The inert solid extenders are usually of mineral origin such as the natural clays, diatomaceous earth and synthetic minerals derived from silica and the like. Examples of such extenders include kaolinites, attapulgite clay and synthetic magnesium silicate. The wettable powders compositions of this invention usually contain from above 0.5 to 60 parts (preferably 5 to 20 parts) of active ingredients mixture, from about 0.25 to 25 parts (preferably 1 to 15 parts) of wetting agent, from about 0.25 to about 25 parts (preferably 1 to 15 parts) of dispersant and from 5 to about 95 parts (preferably 5 to 50 parts) of inert solid extender, all parts being by weight of the total composition. Where required, from about 0.1 to 2.0 parts of the solid inert extender can be replaced by a corrosion inhibitor or anti-foaming agent or both.

The compositions also include dust concentrates comprising from 0.1 to 60% by weight of the active ingredients mixture on a suitable extender; these dusts may be diluted for application at concentrations within the range of about 0.1 to 10% weight.

Compositions which are aqueous suspensions or emulsions may be prepared by stirring a non-aqueous solution of a water insoluble active ingredients mixture and an emulsification agent with water until uniform and then homogenizing to give an emulsion of very finely divided particles. The resulting concentrated aqueous suspension is characterized by its extremely small particle size so that when diluted and sprayed, coverage is very uniform. Suitable concentrations of these formulations contain from about 0.1 to 60%, preferably 5 to 50%, by weight of active ingredients mixture, the upper limit being determined by the solubility limit of active ingredients in the solvent.

Concentrates are usually solutions of active ingredients mixtures in water-immiscible, partially water-miscible or water-miscible solvents together with a surface active agent. Suitable solvents for the active ingredients of this invention include dimethylformamide, dimehtylsulfoxide, N-methyl-pyrrolidone, hydrocarbons, amines and water-immiscible ethers, esters, or ketones. However, other high strength liquid concentrates may be formulated by dissolving the active ingredient in a solvent then diluting, e.g., with kerosene, to spray concentration.

The concentrate compositions herein generally contain about 0.1 to 95 parts (preferably 5 to 60 parts) active ingredients mixture, about 0.25 to 50 parts (preferably 1 to 25 parts) surface active agent and where required about 4 to 94 parts solvent, all parts being by weight based on the total weight of emulsifiable oil.

The compositions of the invention can also be in the form of granules which are physically stable particulate compositions comprising active ingredient mixtures adhering to or distributed through a basic matrix of an inert, finely-divided particulate extender. In order to aid leaching of the active ingredient from the particulate, a surface active agent such as those listed hereinbefore can be present in the composition. Natural clays, pyrophyllites, illite, and vermiculite are examples of operable classes of particulate mineral extenders. The preferred extenders are the porous, absorptive, preformed particules such as preformed and screened particulate attapulgite or heat expanded, particulate vermiculite and the finely divided clays such as kaolin clays, hydrated attapulgite or bentonitic clays. These extenders are sprayed or blended with the active ingredient to form the herbicidal granules.

The granular compositions of this invention may contain from about 0.1 to 30 parts by weight of active ingredients mixture per 100 parts by weight of clay and 0 to about 5 parts by weight of surface active agent per 100 parts by weight of particulate clay.

The compositions of this invention can also contain other additives for example, fertilizers, other herbicides, other pesticides, safeners and other additives commonly used in herbicidal formulations, used as adjuvants or in combination with any of the above-described adjuvants.

Suitable surfactants may be found in "Mc. Cutcheon's Detergents and Emulsifiers Annual", Mc Publishing Corp., Ridgewood, New Jersey or in equivalent technical documents.

It is generally admitted that, in case of synergism, the effectiveness of the mixture cannot be computed from that of the individual ingredients. Synergism is generally defined as the simultaneous action of two or more compounds in which the total response of an organism to the pesticide combination is greater that the sum of the individual components.

A simple mathematical method to test the additivity of a pesticide combination is based on the equation:

$$E = X + \frac{Y(100 - X)}{100}$$

in which X and Y represent the percentage-of-inhibition of growth by toxicant A and B, respectively. E is the expected percentage-of-inhibition of growth by the mixture A and B. In order to show synergism, the actual efficacy should be higher than E.

EXAMPLE 1

A triazole compound according to formula I defined above, where X, is chlorine, X2 is hydrogen, $Y_1$ and $Y_2$ are hydrogen and R means $-CF_2CF_3$ is referenced hereafter as compound A and is formulated as a suspension concentrate (SC) containing about 42% by weight of active ingredient.

Compound A has been tested in combination with fluroxypyr in a growth room test. The fluroxypyr herbicide has been used as the commercially available Starane (tradename) product, a phytohormone type of herbicide.

Three replicate pots per treatment were randomly arranged throughout the growth room. Plants were treated about three weeks after planting. The plants were submitted to a photoperiod of 14 hours per day; the temperature was 15 °C during the day and 9°C at night. All applications were done with a MARDRIVE sprayer simulating as far as possible field conditions, and controled at a pressure of 2 bar and a water volume of 300 l/ha.

The treated species and their respective true leaf stage at spraying were as follows:

TRZAW - winter wheat; 3 leaves
STEME - Stellaria media; 2-4 leaves
LAMPU - Lamium purpureum; 2 leaves
GALAP - Galium aparine; 0-2 leaves
GERMO - Geranium molle; 2-4 leaves
BRSNW - W. oil seed rape; 2 leaves
MATCH - Matricaria chamomilla; 6 leaves

Assessment of per cent phytotoxicity was made by comparison with untreated control pots on an arbitrary scale from 0 to 100%, also could be referenced, where 0 means no visible effect and 100 means death of all plants. The results in table 1 hereafter are presented as average values of three replicates.

Synergism could be observed with combinations of 62.5, 125 and 250 g a.i./ha of A and the same quantities of fluroxypyr on Galium aparine, Lamium purpureum, Stellaria media, oil seed rape and Matricaria chamomilla.

No injury on winter wheat was observed in any treatment in test.

The unexpected synergistic phenomena of the combinations represent an important technological advance in the treatment of wheat crops. The scope of activity or the spectrum of activity has been broadened. Further lower quantities of herbicide may be used to reach the same effect as each taken on its own.

TABLE 1

| | Rate ai g/ha | GALAP DAT 15 | LAMPU 15 | STEME 15 | GERMO 15 | BRSNW 15 | MATCH 15 | TRZAW 15 |
|---|---|---|---|---|---|---|---|---|
| CONTROL | | 0.0 | 0.0 | 0.0 | 0.0 | 0.0 | 0.0 | 0.0 |
| A | 62.5 | 0.0 | 20.0 | 0.0 | 0.0 | 0.0 | 0.0 | 0.0 |
| A | 125 | 20.0 | 30.0 | 20.0 | 0.0 | 0.0 | 0.0 | 0.0 |
| A | 250 | 40.0 | 50.0 | 50.0 | 0.0 | 0.0 | 0.0 | 0.0 |
| STARANE 200 | 62.5 | 50.0 | 50.0 | 50.0 | 40.0 | 0.0 | 0.0 | 0.0 |
| STARANE 200 | 125 | 70.0 | 70.0 | 70.0 | 50.0 | 20.0 | 0.0 | 0.0 |
| STARANE 200 | 250 | 80.0 | 80.0 | 90.0 | 70.0 | 60.0 | 10.0 | 0.0 |
| A + STARANE 200 | 62.5 62.5 | 90.0 | 90.0 | 95.0 | 70.0 | 80.0 | 20.0 | 0.0 |
| A + STARANE 200 | 62.5 125 | 95.0 | 98.0 | 98.0 | 60.0 | 98.0 | 20.0 | 0.0 |
| A + STARANE 200 | 62.5 250 | 100.0 | 100.0 | 98.0 | 80.0 | 98.0 | 30.0 | 0.0 |
| A + STARANE 200 | 125 62.5 | 90.0 | 95.0 | 95.0 | 70.0 | 90.0 | 30.0 | 0.0 |
| A + STARANE 200 | 125 125 | 95.0 | 98.0 | 95.0 | 70.0 | 95.0 | 40.0 | 0.0 |
| A + STARANE 200 | 125 250 | 100.0 | 100.0 | 95.0 | 70.0 | 98.0 | 40.0 | 0.0 |
| A + STARANE 200 | 250 62.5 | 80.0 | 98.0 | 99.0 | 80.0 | 90.0 | 20.0 | 0.0 |
| A + STARANE 200 | 250 125 | 95.0 | 99.0 | 100.0 | 70.0 | 95.0 | 30.0 | 0.0 |
| A + STARANE 200 | 250 250 | 95.0 | 98.0 | 100.0 | 95.0 | 99.0 | 50.0 | 0.0 |

DAT : Days after treatment.

## EXAMPLE 2

A field experiment has been carried out during winter time (November 1990) in Belgium.

Application was made at 250 l/ha using standard spraying equipment (Backpack sprayer; Nozzles XR 11003). Randomised block design with 3 replicates was used. Unit plot size was 2 X 6m$^2$. The soil surface was moist. Total ground cover: 20% crop, 10% weeds and 70% bare ground.

The plant species tested and corresponding true leave stage are:

| WEED | STAGE (leaves) | HEIGHT (cm) | % POPULATION |
|---|---|---|---|
| GALAP | 0 - 1 | 3 | 2 |

The herbicides tested are the herbicide A as described in Example 1 in tank mix with another phytohormone type of herbicide, that is mecoprop. 0.2% surfactant (Tween® 20) has been added to the tank.

The results in table 2 hereafter are presented as average values of three replications.

It has been seen that the tested combination provides broad spectrum control of dicotyledoneous plants in winter-wheat and winter barley. As it appears from the table of results, synergism is observed on Galium aparine.

According to the equation mentioned earlier above, the combination of 100 g a.i./ha of A and 1 200 g a.i./ha of mecoprop is expected to give a 81.12% control, whilst the actual control amounts to a total kill. Similarly 150 g a.i./ha of A and 1000 g a.i./ha of mecoprop in combination are expected to provide a 91.12% control, whilst the actually established control amounts to 96.7%.

TABLE 2

| COMPOUND | RATE g a.i/ha | GALAP 120 DAT |
|---|---|---|
| A | 100<br>150 | 43.3<br>66.7 |
| mecoprop | 1000<br>1200 | 73.3<br>66.7 |
| A + mecoprop<br>A + mecoprop | 100 + 1200<br>150 + 1000 | 100.0<br>96.7 |

EXAMPLE 3

The same procedure as in Example 1 was followed using a combination of the triazole compound A and the herbicide mecoprop-P sold as DUPLOSAN KV (tradename), an aqueous-soluble concentrate of 600 g/l (B).

The treated species are:

MATCH - Matricaria chamomilla
ALOMY - Alopecurus Myosuroides
BRSNX - W. oilseed rape
GERMO - Geranium molle
STEME - Stellaria media
LAMPU - Lamium purpureum

The results obtained are summarized in Table 3 and represent the percent phytotoxicity averaged over 3 replicates assessed 15 days after treatment. EXP means expected control according to the formula introduced in the body of the specification, and ACT means control actually assessed.

TABLE 3

| rate a.i. g/l | MATCH EXP | MATCH ACT | ALOMY EXP | ALOMY ACT | BRSNX EXP | BRSNX ACT | GERMO EXP | GERMO ACT | STEME EXP | STEME ACT | LAMPU EXP | LAMPU ACT |
|---|---|---|---|---|---|---|---|---|---|---|---|---|
| A | | | | | | | | | | | | |
| 62.5 | | 0 | | 0 | | 10 | | 10 | | 20 | | 0 |
| 125 | | 0 | | 0 | | 10 | | 20 | | 40 | | 10 |
| 250 | | 0 | | 0 | | 30 | | 60 | | 80 | | 20 |
| B | | | | | | | | | | | | |
| 250 | | 20 | | 0 | | 20 | | 30 | | 70 | | 50 |
| 500 | | 20 | | 0 | | 50 | | 80 | | 95 | | 60 |
| 1000 | | 50 | | 0 | | 70 | | 90 | | 98 | | 70 |
| A + B | | | | | | | | | | | | |
| 62.5 + 250 | 20 | 30 | 0 | 0 | 28 | 70 | 37 | 70 | 76 | 90 | 50 | 50 |
| 62.5 + 500 | 20 | 40 | 0 | 0 | 55 | 80 | 82 | 90 | 96 | 98 | 60 | 80 |
| 62.5 + 1000 | 50 | 40 | 0 | 0 | 73 | 90 | 91 | 95 | 98 | 98 | 70 | 80 |
| 125 + 250 | 20 | 20 | 0 | 0 | 28 | 80 | 44 | 90 | 82 | 98 | 55 | 60 |
| 125 + 500 | 20 | 30 | 0 | 0 | 55 | 80 | 84 | 95 | 97 | 98 | 64 | 70 |
| 125 + 1000 | 50 | 50 | 0 | 0 | 73 | 90 | 92 | 98 | 99 | 99 | 73 | 90 |
| 250 + 250 | 20 | 40 | 0 | 0 | 44 | 80 | 72 | 90 | 94 | 98 | 60 | 60 |
| 250 + 500 | 20 | 40 | 0 | 0 | 65 | 90 | 92 | 90 | 99 | 99 | 68 | 80 |
| 250 + 1000 | 50 | 50 | 0 | 0 | 79 | 95 | 96 | 98 | 100 | 99 | 76 | 90 |

It appears that on BRSNX and GERMO for instance, where each of the herbicides taken alone is rather weak at the indicated rates, commercial control substantially above the expected control is already obtained at the lower rates of the mixture. The spectrum of herbicidal activity of A is broadened as evidenced by the above. Also, on LAMPU where herbicide A is rather weak, improved control is obtained when mixed with mecoprop-P.

EXAMPLE 4

The same procedure as in Example 1 was followed, using a combination of the triazole compound A and the herbicide dichlorprop-P sold as DUPLOSAN DP (tradename), a soluble concentrate of 600 g/l (B).

The treated species are the same as in Example 3 and the results (percent control) obtained are presented in Table 4 as an average over 3 replicates assessed 15 days after treatment.

EXP means expected control according to the formulations introduced in the body of this specification, and ACT means control actually assessed.

As can be seen from the table, the selectivity against ALOMY is well respected for the combination of the triazole derivative A and dichlorprop-P. Further, the synergistic effect of the combination is particularly marked on BRSNX and GERMO where each of the individual componenet is weak; commercial control is reached at rather low rates. Also on MATCH and LAMPU the synergistic effect of the combination is well pointed out.

TABLE 4

| rate | MATCH | | ALOMY | | BRSNX | | GERMO | | STEME | | LAMPU | |
|---|---|---|---|---|---|---|---|---|---|---|---|---|
| a.i. g/l | EXP | ACT | EXP | ACT | EXP | ACT | EXP | ACT | EXP | ACT | EXP | ACT |
| A | | | | | | | | | | | | |
| 62.5 | | 0 | | 0 | | 10 | | 10 | | 20 | | 0 |
| 125 | | 0 | | 0 | | 10 | | 20 | | 40 | | 10 |
| 250 | | 0 | | 0 | | 30 | | 60 | | 80 | | 20 |
| B | | | | | | | | | | | | |
| 250 | | 20 | | 0 | | 30 | | 30 | | 80 | | 50 |
| 500 | | 20 | | 0 | | 40 | | 80 | | 95 | | 80 |
| 1000 | | 30 | | 0 | | 70 | | 90 | | 99 | | 90 |
| A + B | | | | | | | | | | | | |
| 62.5 + 250 | 20 | 30 | 0 | 0 | 37 | 70 | 46 | 70 | 84 | 95 | 50 | 70 |
| 62.5 + 500 | 20 | 40 | 0 | 0 | 46 | 90 | 91 | 90 | 96 | 98 | 80 | 90 |
| 62.5 + 1000 | 30 | 50 | 0 | 0 | 73 | 90 | 96 | 98 | 99 | 99 | 90 | 95 |
| 125 + 250 | 20 | 20 | 0 | 0 | 37 | 80 | 44 | 98 | 88 | 100 | 55 | 90 |
| 125 + 500 | 20 | 40 | 0 | 0 | 46 | 90 | 84 | 98 | 97 | 100 | 82 | 95 |
| 125 + 1000 | 30 | 50 | 0 | 0 | 73 | 95 | 92 | 95 | 99 | 99 | 91 | 98 |
| 250 + 250 | 20 | 30 | 0 | 0 | 51 | 80 | 72 | 70 | 96 | 95 | 60 | 80 |
| 250 + 500 | 20 | 30 | 0 | 0 | 58 | 95 | 92 | 98 | 99 | 98 | 84 | 95 |
| 250 + 1000 | 30 | 60 | 0 | 0 | 79 | 98 | 96 | 100 | 100 | 100 | 92 | 98 |

## Claims

1. A combination comprising a triazole compound of formula I:

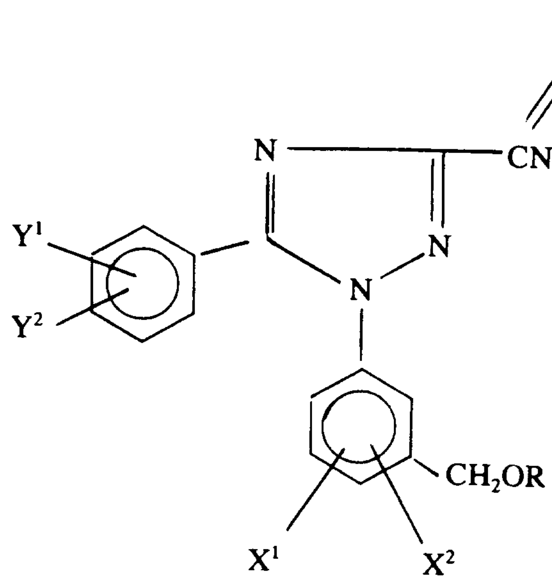

wherein R is a straight-chain alkyl group having 1 to 10 carbon atoms which is non-substituted or substituted with 1 to 19 fluorine atoms, a branched alkyl group having 3 to 10 carbon atoms which is non-substituted or substituted with 1 to 19 fluorine atoms, a cyclic alkyl group having 3 to 10 carbon atoms, an alkyl group having 1 to 3 carbon atoms which is substituted with an alicyclic structure having 3 to 7 carbon atoms, a phenyl group or an aralkyl group having 7 to 9 carbon atoms; $X^1$ is a halogen or an alkyl group having 1 to 3 carbons. atoms; $X^2$ is a hydrogen, a halogen or an alkyl group having 1 to 3 carbon atoms; $Y^1$ is a hydrogen or a fluorine; and $Y^2$ is a hydrogen or a fluorine; and at least a co-herbicide selected from phytohormone type of herbicides.

2. A combination according to Claim 1 characterized in that the triazole derivative has the formula I defined above where $X^1$ is chlorine, $X^2$ is hydrogen, $Y^1$ and $Y^2$ are hydrogen and R means $-CF_2CF_3$.

3. A combination according to Claim 1 or 2 characterized in that the phytohormone type herbicide is preferably 2,4-D, MCPA, MCPB, mecoprop, mecoprop-P, dichlorprop, dichlorprop-P, dicamba, picloram, or a pyridine such as fluroxypyr or triclopyr.

4. A herbicidal concentrated formulation, in form of a solution, dispersion or emulsion, comprising a combination according to any of the preceding claims, and possibly formulation aids and agriculturally acceptable adjuvants, like surfactants, antifreeze agents.

5. A herbicidal spray solution comprising a combination according to any of the Claims 1-3 and possibly agriculturally acceptable adjuvants, like surfactants, anti-freeze agents.

6. The use of a combination according to any of Claims 1-3 for selectively killing or controlling the growth or germination of undesired plants by application thereof sequentially or simultaneously to the plant, the seed or the locus of the seed or plant, a herbicidally effective amount of said combination.

European Patent Office

# EUROPEAN SEARCH REPORT

Application Number

EP 93 87 0033

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 282 303 (KUREHA KAGAKU)<br>* page 2, line 51 - page 4, line 16 *<br>* page 12, line 64 - line 65 *<br>* page 16, line 45 - page 28 *<br>--- | 1-6 | A01N43/653<br>//(A01N43/653, 43:40, 39:04, 39:02, 37:40) |
| D,A | EP-A-0 427 695 (MONSANTO)<br>* page 2, line 38 - page 3, line 8 *<br>* page 4, line 10 - line 15 *<br>--- | 1-6 | |
| A | WO-A-9 105 469 (HOECHST)<br>* page 1, line 27 - page 2, line 25 *<br>* page 5, line 16 - line 25 *<br>* page 9, line 12 - page 11, line 25 *<br>--- | 1-6 | |
| A | GB-A-2 137 092 (IMPERIAL CHEMICAL INDUSTRIES)<br>* page 3, line 25 - page 4, line 9 *<br>----- | 1-6 | |
| | | | TECHNICAL FIELDS SEARCHED (Int. Cl.5) |
| | | | A01N |

The present search report has been drawn up for all claims

| Place of search | Date of completion of the search | Examiner |
|---|---|---|
| THE HAGUE | 22 JULY 1993 | LAMERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document